**Europäisches Patentamt**

**European Patent Office**

**Office européen des brevets**

(19)

(11) Publication number: **0 047 630**
**A1**

(12) # EUROPEAN PATENT APPLICATION

(21) Application number: **81304006.0**

(22) Date of filing: **02.09.81**

(51) Int. Cl.³: **B 01 D 19/04, C 08 L 83/04**

(30) Priority: **05.09.80 JP 123899/80**

(43) Date of publication of application: **17.03.82**
**Bulletin 82/11**

(84) Designated Contracting States: **BE DE FR GB IT NL**

(71) Applicant: **Toray Silicone Company Limited,**
**2-Nihonbashi Muromachi, Chuo-ku Tokyo 103 (JP)**

(72) Inventor: **Shimizu, Hiroshi, 1-6 Yushudai Nishi, Chiba-ken (JP)**
Inventor: **Fukano, Yoshimasa, 1-6 Yushudai Nishi, Chiba-ken (JP)**
Inventor: **Yoshizawa, Minoru, 1-6 Yushudai Nishi, Chiba-ken (JP)**

(74) Representative: **Lewin, John Harvey et al, Elkington and Fife High Holborn House 52/54 High Holborn, London WC1V 6SH (GB)**

(54) **Silicone anti-foaming compositions.**

(57) Composite anti-foaming agents having an excellent, long-lasting defoaming effect are disclosed. These agents are particularly useful in an alkaline medium and in vigorously agitated media. These agents are formed by mixing and reacting an organopolysiloxane oil and/or a hydrocarbon oil; an organohydrogenpolysiloxane; a finely divided silica; and optionally to increase the rate of reacting, a catalyst for the reaction of silicon-bonded hydrogen atoms with silicon-bonded hydroxyl radicals.

EP 0 047 630 A1

-1-

# SILICONE ANTI-FOAMING COMPOSITIONS

## Background of the Invention

The present invention is concerned with a composite silicone anti-foaming agent. In particular, the present invention is concerned with a composite anti-foaming agent which has an excellent anti-foaming effect which is continuously maintained, particularly in systems which are vigorously agitated and/or in alkaline solutions.

Conventional silicone anti-foaming agents, because they exhibit excellent anti-foaming effects in small quantities compared to non-silicone anti-foaming agents, such as alcohols, esters, mineral oils, vegetable oils and synthetic oils, etc., are widely employed for the purposes of suppressing and breaking up foam in waste water, dyeing processes, fermentation processes, latexes, cements, paints, adhesives, petroleum processes, etc. However, silicon anti-foaming agents are defective in that the continuity of the anti-foaming effect is tremendously lowered in

0047630

-2-

alkaline systems, such as in the pulp digesting process in the pulp paper manufacturing industry, and in systems where vigorous stirring takes place, such as in gas extraction tanks at waste water treatment plants or in jet dyeing. It is, therefore, necessary to supplement the anti-foaming agent, either continuously or intermittantly. Since this is extremely uneconomical, the industries concerned desire an anti-foaming agent with an improved, continuous anti-foaming effect.

Among the techniques for improving the defects above, the following substances have been suggested: (1) dimethyldichlorosilane (Japanese Patent Number Sho 52-31836); (2) silica treated with organic silicone compounds containing nitrogen and dispersed in organopolysiloxane oil (Japanese Patent Number Sho 51-35556); (3) anti-foaming agents composed of amino-functional silicone compounds, phosphorus bulking agents in the shape of flakes, finely powdered metallic oxides, and organopolysiloxane oils (Japanese Patent Number Sho 52-41184). However, the agents of references (1)

-3-

and (2) require a long time to form hydrophobic
silica.  In addition, since complex treatment
processes are necessary, they are uneconomical.
The agent of reference (3) has an excellent
immediate effect; but, since some kinds of metallic
oxides and flakes phosphorus bulking agents have
large granules with large specific gravities, it is
easy for them to settle out and separate during
operation.  These agents are defective even when
they are employed in systems which generate foam,
since they settle out and cannot be said to
demonstrate a completely satisfactory anti-foaming
effect.  Besides these kinds of defects, the
anti-foaming agents of references (1), (2), and (3)
described above cannot be said to be completely
satisfactory since they do not always continuously
maintain their anti-foaming effectiveness.

Brief Summary of the Invention
It is an object of this invention to
provide an anti-foaming agent which does not suffer
from one or more of the above-described defects of

-4-

the anti-foaming agents of the art. It is another object of this invention to provide an anti-foaming agent which maintains its effect continuously. It is a further object of this invention to provide an anti-foaming agent which is continuously effective in an alkaline medium. It is also an object of this invention to provide an anti-foaming agent which is continuously effective in an agitated medium.

These objects, and others which will be obvious when considering the following disclosure and appended claims, are realized by the compositions of this invention which are prepared by forming a mixture of a hydrophobic oil, a silicone having silicon-bonded hydrogen atoms, a finely divided silica and optionally, a catalyst for the reaction of silicon-bonded hydrogen atoms with silicon-bonded hydroxyl radicals.

## Detailed Description of the Invention

The present invention relates to an anti-foaming agent obtained by mixing (A) 100 parts by weight of a hydrophobic oil selected from the group consisting of organopolysiloxane oils, and hydrocarbon oils, (B) 0.1 to 100 parts by weight of an organohydrogenpolysiloxane, (C) 1 to 50 parts by weight of a finely divided silica, and (D) 0 to 5 parts by weight of a catalyst for the reaction of silicon-bonded hydrogen atoms with silicon-bonded hydroxyl radicals.

The hydrophobic oil (A) can be any oil which is liquid at room temperature and which is selected from the group consisting of organopolysiloxane oils, hydrocarbon oils or mixtures of the two types of oils.

The organopolysiloxane oils are typically represented by the average formula $R_aSiO_{(4-a)/2}$, wherein R denotes any monovalent hydrocarbon radical; such as alkyl radicals, such as methyl, ethyl, propyl, or hexyl; cycloaliphatic radicals, such as cyclohexyl; aryl radicals, such as phenyl and tolyl; and aralkyl radicals, such as benzyl. Preferably, R has less then 7 carbon atoms and $a$ has a value of from 1.9 to 2.1, both inclusive.

-6-

Examples of suitable organopolysiloxane oils include poly(dimethylsiloxane), poly(methylphenylsiloxane), poly(methylethylsiloxane), poly(diethylsiloxane), poly (ethylphenylsiloxane), etc. From the points of view of anti-foaming effectiveness and of economics, poly(dimethylsiloxane) oil is highly preferred. The terminal portions of the organopolysiloxane oil polymer chains can be hydroxyl groups and/or triorganosilyl groups, such as trimethylsilyl groups. A trimethylsilyl-endblocked poly(dimethylsiloxane) having the formula $(CH_3)_3SiO\{(CH_3)_2SiO\}_nSi(CH_3)_3$, wherein $\underline{n}$ has a value sufficient to provide the desired viscosity for the organopolysiloxane, is a most preferred organopolysiloxane oil component (A).

It is sufficient that the viscosity of the organopolysiloxane oil be that of a liquid at normal temperatures; however, from the standpoint of ease of manageability and anti-foaming effectiveness, it is desirable that said viscosity should be within the range of 50-10,000 centistokes at 25°C.

As the hydrocarbon oil, it is permissible to use aliphatic hydrocarbon oils, aromatic hydrocarbon oils, or alicyclic hydrocarbon oils. The hydrocarbon oils that are used should have viscosities corresponding to that of the previously described organopolysiloxane oil.

In cases where a mixture of organopolysiloxane oil and hydrocarbon oil is employed, the mixing proportions have no particular limitations and may be done as desired. There may be cases where only extremely small amounts of one oil are added to the other oil.

The organohydrogenpolysiloxane which is employed as component (B) in the present invention is exemplified by having at least one Si-H group in each molecule. The organic radicals in this component are those delineated above for R in component (A). Most preferably, component (B) is a methylhydrogenpolysiloxane having at least one Si-H group on each molecule. The organohydrogenpolysiloxane can have any molecular form such as straight chains, rings, and branched chains, as long as they are in liquid form at normal temperatures. There are no special limitations as to the viscosity of the organohydrogenpolysiloxane; but from the point of view of easy processability and reactivity with the hydroxyl groups of finely divided silica, delineated below, it is preferred that organohydrogenpolysiloxanes be used which have a viscosity below 1000 centistokes, most preferably below 100 centistokes at 25°C.

Component (B) is preferably a trimethylsilyl-endblocked poly(methylhydrogensiloxane) having the formula $(CH_3)_3SiO\{(CH_3)(H)SiO\}_nSi(CH_3)_3$ wherein $\underline{n}$ has a value sufficient to provide the desired viscosity for the methylhydrogenpolysiloxane.

There are no critical limitations on the amount of organohydrogenpolysiloxane which is used to form the compositions of this invention, since

-9-

it varies according to the molecular weight of the organohydrogenpolysiloxane, the average number of Si-H groups which are found in each molecule, and the mixed-in amount of finely divided silica. Normally, however, 0.1-100 parts by weight of component (B) is used for every 100 parts by weight of component (A). Normally, 10-200 parts by weight is used for every 100 parts by weight of the finely divided silica component (C).

Although it is desirable from the point of view of anti-foaming effectiveness that substances with a surface area above 100 $m^2/g$ be used as the finely divided silica in the present invention, there are no special limitations. The following are examples of suitable finely divided silica: fumed silica, silica aerogel, precipitated silica, quartz dust, fused silica, and pyrogenic silica. It is also possible to use silicas which have had their surfaces treated, such as with organosilanes, organosilazanes, organic compounds, inorganic compounds, etc., so long as the functional groups on the surface thereof, such as hydroxyl groups, etc., remain to react with Si-H groups. Since the amount of finely divided silica which is added influences the anti-foaming effectiveness unsatisfactorily if too much or too little is added, 1-50 parts by weight, preferably 3-20 parts by weight, is the range of silica to be used for every 100 parts by weight of component (A).

Although the catalyst employed in the present invention as component (D) is not a necessary component, it has the effect of accelerating the dehydrogenation reaction of the Si-H groups of the organohydrogenpolysiloxane with, for example, the hydroxyl groups on the silica surface. Some examples of these catalysts are tin dibutyl diacetate, tin dibutyl dilaurate, tin dibutyl dioctoate, lead octoate, iron octoate, zinc octoate, etc.

The composite anti-foaming agent of the present invention can be obtained by mixing together components (A)-(C) or by mixing together components (A)-(D). It is desirable when mixing the components that stirring take place for 2-3 hours at 120-200°C.  It is desirable that the
mixing device be able to mix and heat at the same
time.  In addition, in order to blend or homogenize
this composition, it is permissible to treat it
with homogenizers, ball mills, colloid mills,
tri-rollers, etc.  Depending on the situation, it
is also permissible to use inert gases such as
nitrogen, etc., during said mixing and/or heating.
It is possible to employ any device needed in
performing the mixing, so long as homogenization
takes place.

There are no special limitations as to
what order should be used in said mixing.  For
example, it is possible to adopt the following
methods:  (1) The method of mixing components
(A)-(C) or components (A)-(D) simultaneously.  (2)
The method of mixing component (A) with component
(C) to produce a silicone compound, then adding
component (B), or component (B) and component (D)
to the mix.  (3) The method of mixing component (A)
and component (B) to produce a liquid mixture, then
mixing in component (C), or component (C) and component (D). (4) The method of mixing component (B) and component (C), or components (B)-(D) beforehand and treating with silica dust and then mixing component (A) into the treated silica. (5) Carrying out the mixing described in (1)-(4) with an organic solvent. (6) The method of emulsification by adding water to the mixtures obtained by methods (1)-(4) described above in the presence of a surfactant, or by adding water and a surfactant to the mixtures produced in methods (1)-(4). Although it is permissible to select freely from methods (1)-(6), depending on the purpose for which it will be employed, the methods of mixing are not restricted to the methods described above.

While not wishing to limit this invention by theory we believe that the excellent continuous anti-foaming effectiveness of the present composition results from the bonding of the organohydrogenpolysiloxane to the silica surface, due to the dehydrogenation reaction of Si-H groups with the hydroxyl groups of the silica.

-13-

The composite anti-foaming agent of the present invention can be employed in various forms, depending on the foam-generating system to be treated. For example, it is possible.to use dilution by means of an organic solvent, which is presented in mixing method (5) described above, in cases where the foam-generating system is an oil system or a solvent system. The organic solvent mentioned here can be selected from among liquid, conventional, well-known solvents with boiling points below 250°C, such as hydrocarbon solvents, halogenated hydrocarbons, amines, alcohols, esters, ketones, ethers, and acids. The following is an incomplete list of examples: methylcyclohexane, xylene, petroleum naphtha, perchloroethylene, bromochloroethane, dichlorobutane, triethylamine, butylamine, tributylamine, isopropyl alcohol, butyl alcohol, amyl alcohol, hexyl ether, butyl Cellosolve, dioxane, methyl ethyl ketone, diethyl ketone, methyl butyl ketone, esters of acetic acid, Cellosolve acetate, propionic acid esters, acetic acid, propionic acid, or 2-ethylhexanoic acid.

-14-

In addition, when the foam-generating system is a water system, this composite substance can be emulsified using a well-known surfactant and water as in method (6); and to use it in emulsified form. Although the following surfactants may be thus employed, the surfactants which may be used are not limited to these: sorbitan fatty acid esters; propylene glycol fatty acid esters; polyoxyethylene sorbitan fatty acid esters; polyoxyethylene alkylethers; polyoxyethylene castor oil; ethylene-oxide and propylene oxide additives; etc. At the time of emulsification, it is permissible to use a protective colloid which has the effect of increasing viscosity, raising the stability, dispersibility, or cohesiveness. For example, methyl cellulose, milk sugar, sodium alginate, cane sugar fatty acid esters, tragacanth gum, polyvinyl alcohol, hydroxypropyl cellulose, carboxyvinyl polymers, etc., may be used. In addition, the surfactants and protective colloids described above may be used in this composite substance as powdered anti-foaming agents.

Besides the organic solvents, water, surfactants, and protective colloids which are described above, it is possible to mix the following substances into the compositions of the present invention: soy bean oil, vegetable oils, peanut oils, coconut oils, polyethers, carboxylic acid esters, phosphoric acid esters, perfluorocarbons, chlorinated aromatic groups, lauric acids, polyalkylene glycol, organosilanes, organosilazanes, aluminum hydroxide, potassium hydroxide, magnesium hydroxide, powdered metallic oxide substances, flake-type phosphorus bulking agents, organosilicon compounds which contain amino-functional groups, etc.

Next, examples of the present invention, and comparative examples, will be shown. In the examples and comparative examples, 'parts' has the meaning of 'parts by weight,' and viscosity is measured at 25°C. Moreover, cs is an abbreviation for centistokes.

Example 1

     100 parts of a dimethylsilicone oil having a viscosity of 350 cs (SH 200, manufactured by Toray Silicones KK), 5 parts of a poly(methylhydrogensiloxane) having a viscosity 20 cs (SH 1107, manufactured by the same company), and 5 parts silica (Aerogel 200, manufactured by the Nihon Aerogel KK), were mixed together at room temperature for 30 minutes using a Hobart mixer. Then a mixing device which has a heater and a stirrer was employed to mix them at 150°C for 2 hours, in order to produce an anti-foaming compound of this invention.

Example 2

     100 parts of a dimethylsilicone oil having a viscosity of 1000 cs (SH 200, made by Toray Silicones KK), 3 parts of a poly(methylhydrogensiloxane) having a viscosity of 20 cs (SH 1107, made by the same company), together with 8 parts silica (Syloid 266, made by the Fuji Davison KK), and 1 part tin dibutyl diacetate were

-17-

mixed together in the same manner as in Example 1, and an anti-foaming compound of this invention was produced.

Example 3

100 parts of a dimethylsilicone oil having a viscosity of 3000 cs (SH 200, manufactured by the Toray Silicones KK), 2 parts of a poly(methylhydrogensiloxane) having a viscosity of 20 cs (KF 99, manufactured by Shinetsu Kagaku Kogyo KK), and 5 parts silica (Syloid 266) were mixed together in the same manner as in Example 1 and an anti-foaming compound of this invention was produced.

Example 4

100 parts of a dimethylsilicone oil having a viscosity of 1000 cs (SH 200, manufactured by Toray Silicones KK), 10 parts of a poly(methylhydrogensiloxane) having a viscosity of 20 cs (SH 1107, manufactured by the same company), together with 5 parts silica (Aerogel 200,

0047630

-18-

manufactured by Nihon Aerogel KK), and 0.5 parts zinc octoate were mixed together for two hours at 150°C using a Chemstirrer, and an anti-foaming compound of this invention was produced.

## Example 5

100 parts of a dimethylsilicone oil having a viscosity of 1000 cs (KF 96, manufactured by Shinetsu Kagaku Kogyo KK), 3 parts of a poly(methylhydrogensiloxane) having a viscosity of 20 cs (KF 99, manufactured by the same company), and 8 parts hydrophobic silica (Aerogel R972) were mixed together in the same manner as in Example 4, and an anti-foaming compound of this invention was produced.

## Example 6

500 parts 1,1,1-trichloroethane, 30 parts silica (Syloid 266, manufactured by Fuji Davison KK), and 10 parts of a poly(methylhydrogensiloxane) having a viscosity of 20 cs (SH 1107, made by Toray Silicones KK), are introduced into a separation flask. After they have been refluxed for 3 hours
at 70-80°C, the 1,1,1-trichloroethane is distilled
out and discarded. The reaction mix is then dried
for two hours at 150°C so that a hydrophobic silica
is obtained. After 8 parts of silica as described
in Example 5 have been dispersed into 100 parts of
a dimethylsilicone oil having a viscosity of 1000
cs (SH 200, manufactured by Toray Silicones KK),
mixing is carried out in the same manner as in
Example 4 and an anti-foaming compound of this
invention is produced.

Comparative Example 1

SH 5500 (manufactured by Toray Silicones
KK) was employed as a conventional product. This
product is made from dimethylsilicone oil and
powdered silica.

Comparative Example 2

100 parts of a dimethylsilicone oil having
a viscosity of 350 cs (SH 200, manufactured by
Toray Silicones KK) was mixed with 8 parts silica (Aerogel R972, a substance which has been
hydrophobically treated with chlorosilane and
manufactured by Degussa KK) in the same manner as
in Example 1 and an anti-foaming compound was
produced.

Comparative Example 3

100 parts of a dimethylsilicone oil having
a viscosity of 1000 cs (SH 200, manufactured by
Toray Silicones KK) was mixed with 8 parts silica
(Tranox, a silica which has been hydrophobically
treated with silazane and manufactured by Tulco,
Inc.), and an anti-foaming compound was produced.

Comparative Example 4

100 parts of a dimethylsilicone oil having
a viscosity of 350 cs (SH 200, manufactured by
Toray Silicones KK), 3 parts
N-β-aminoethyl-γ-aminopropyltrimethoxysilane (SH
6020, manufactured by the same company), and 10
parts silica (Syloid 266, manufactured by Fuji Davison KK) were mixed together in the same manner
as in Example 1, and an anti-foaming compound was
produced.

Comparative Example 5

100 parts of the anti-foaming agent
compound SH 5500 (dimethylsilicone oil and finely
divided silica manufactured by Toray Silicon KK), 6
parts N-$\beta$-aminoethyl-$\gamma$-aminopropyltrimethoxysilane
(manufactured by the same company), and 12 parts
mica powder (about 300 mesh, manufactured by Yamada
Kogyo KK) were mixed together for two hours at 95°C
in a manner corresponding to Example 1, and an
anti-foaming compound was produced.

For each of the anti-foaming compounds
produced by means of Comparative Examples 1-5 and
Examples 1-6 as described above, tests were carried
out on the continuity of the anti-foaming
effectiveness as described below. The results are
displayed in Table I.

Tests on the Continuity of the Anti-foaming Effect

100 ml of a 1.0% by weight aqueous solution of the surfactant Octapol 100 (polyoxyethyleneoctylphenylether, manufactured by Sanyo Kasei Kogyo KK) was placed in a 300 ml flask with an attached lid. This was taken as the foam generating liquid. Separately, 0.40 g of an anti-foaming compound, exactly measured, was placed in a 100 ml measuring flask and tertiary butanol was added to 100 ml. 1.0 ml of this anti-foaming agent solution was extracted by pipette and added to the foam-generating solution. This mixture was set in an agitating machine and agitated for 10 seconds. After a strong foaming effect had been produced the time it took for the foam to dissipate was measured. This process was carried out repeatedly, and the number of repetitions which required less than five minutes to dissipate the foam was termed continuousness frequency, which expressed the continuity of the anti-foaming effect.

TABLE I

| Anti-foaming Agent Compound | | Continuousness Frequency |
|---|---|---|
| Example | 1 | 12 |
| | 2 | 12 |
| | 3 | 11 |
| | 4 | 12 |
| | 5 | 10 |
| | 6 | 10 |
| Comparative Example | 1 | 5 |
| | 2 | 0 |
| | 3 | 0 |
| | 4 | 2 |
| | 5 | 6 |

Examples 7-9

After 20 parts of the anti-foaming compound employed in Example 1 was mixed for 20 minutes at 60-70°C with 3 parts of the surfactant Span 60 (sorbitan fatty acid esters, manufactured by Kao Atlas KK), along with 2 parts Atmul P40S (glycerin fatty acid esters) and 75 parts water, the mixture was treated in a homomixer and an emulsified composition of this invention, designated Example 7, was produced.

Using the anti-foaming compound of Example 3, an emulsified composition of this invention, designated Example 8, was produced under the same conditions as in Example 7.

Using the anti-foaming compound of Example 3, an emulsified composition of this invention, designated Example 9, was produced under the same conditions as in Example 7.

Comparative Examples 6-8

Using the anti-foaming compound of Comparative Example 1, under the same conditions as

-25-

in Example 7, an emulsified substance was produced and designated Comparative Example 6.

Using the anti-foaming compound of Comparative Example 3, under the same conditions as in Example 7, an emulsified substance was produced and designated Comparative Example 7.

Using the anti-foaming compound of Comparative Example 5, under the same conditions as in Example 7 an emulsified substance was produced and designated Comparative Example 8.

The emulsions which were produced by means of the above-described Examples 7-9 and Comparative Examples 6-8, were tested by means of the anti-foaming tests described below.

Tests of Anti-foaming Qualities

Into a 1 liter measuring flask was placed 200 ml of a 1.0 wt % aqueous solution (adjusted to a pH of 11 with KOH) of the surfactant Octapol 100 (polyoxyethyleneoctylphenylether) manufactured by Sanyo Kasei Kogyo KK) and 0.10 g of the emulsion to be tested. Air was sucked into the mixture at 600 ml/minute after passing through a glass wool filter. The time (in minutes) that it took for the surface of the foam to reach 800 ml was measured. Results are displayed in Table II. Note that the alkaline mixtures comprising the anti-foaming agents of this invention are more difficult to foam than mixtures containing the comparative compositions.

TABLE II

| Anti-foaming Agent Emulsion | | Time (Minutes) |
|---|---|---|
| Example | 7 | 23 |
| | 8 | 25 |
| | 9 | 25 |
| Comparative Example | 6 | 5 |
| | 7 | 6 |
| | 8 | 15 |

Example 10

Under the same conditions as in Example 1, 100 parts of a hydrocarbon oil (Fuji 180 turbine oil having a viscosity of 90 cs at 37.8°C, corresponding to a JIS-K-2213 #3 product and manufactured by Showa Petroleum KK), 20 parts of a poly(methylhydrogensiloxane) having a viscosity of 20 cs (SH 1107, made by Toray Silicones KK), 8 parts silica (Syloid 266, manufactured by Fuji Davison), and 0.2 parts tin dibutyldilaurate were mixed together, and an anti-foaming agent compound of this invention was produced. In the same manner as for Example 1 the continuity of the anti-foaming effect of this composition was found to be 8.

Example 11

100 parts of a dimethylsilicone oil having a viscosity of 500 cs (SH 200, manufactured by Toray Silicon KK), 10 parts Fuji 150 spindle oil (with a viscosity of 38 cs at 30°C, corresponding to materials like JIS-K-2210 #2 and manufactured by Showa Petroleum), 5 parts of a poly(methylhydrogensiloxane) having a viscosity of
20 cs (SH 1107, manufactured by Toray Silicones
KK), and 5 parts silica (Syloid 266, manufactured
by Fuji Davison KK) were mixed in the same manner
as in Example 1, and an anti-foaming agent compound
of this invention was produced. Tests were carried
out in the same manner as for Example 1 to test the
continuity of the anti-foaming effect, and were
repeated 10 times.

0047630

-29-

Claims:

1. An anti-foaming agent characterized in that it is obtained by mixing

   A. 100 parts by weight of a hydrophobic oil selected from the group consisting of organopolysiloxane oils and hydrocarbon oils,

   B. 0.1 to 100 parts by weight of an organohydrogenpolysiloxane,

   C. 1 to 50 parts by weight of a finely divided silica and

   D. 0 to 5 parts by weight of a catalyst for the reaction of silicon-bonded hydrogen atoms with silicon-bonded hydroxyl radicals.

2. An anti-foaming agent according to claim 1 wherein the organohydrogenpolysiloxane is a trimethylsilyl-endblocked poly(methylhydrogensiloxane) having a viscosity of less than 100 centistokes at 25°C.

3. An anti-foaming agent according to claim 2 wherein from 10 to 200 parts of organohydrogenpolysiloxane are mixed for every 100 parts by weight of finely divided silica.

4. An anti-foaming agent according to claim 3 wherein the hydrophobic oil is an organopolysiloxane oil having a viscosity of from 50 to 10,000 centistokes at 25°C and the average formula $R_aSiO_{(4-a)/2}$ wherein R denotes a monovalent hydrocarbon radical and $\underline{a}$ denotes a number having a value of from 1.9 to 2.1, both inclusive.

5. An anti-foaming agent according to claim 4 wherein the hydrophobic oil is a trimethylsilyl-endblocked polydimethylsiloxane oil.

6. An anti-foaming agent according to claim 3 wherein the hydrophobic oil is a hydrocarbon oil having a viscosity of from 50 to 10,000 centistokes at 25°C.

-31-

7.  An anti-foaming agent according to
    claim 6 wherein the hydrocarbon oil is
    a turbine oil or a spindle oil.

8.  An anti-foaming agent according to
    claim 1 wherein the mixture of
    components is mixed and heated for 2
    to 3 hours at 120° to 200°C.

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 705 860 (BASF WYANDOTTE)<br>  * Column 1, lines 22-28; column 2, line 36 - column 4, line 64 *<br><br>-- | 1-3,6, 8 | B 01 D 19/04<br>C 08 L 83/04 |
| A | US - A - 3 923 683 (NALCO) | | |
| A | US - A - 4 123 383 (DIAMOND SHAM-ROCK) | | |
| A | US - A - 4 032 473 (ASSOCIATED CHEMISTS) | | TECHNICAL FIELDS SEARCHED (Int. Cl.³) |
| A | US - A - 4 076 648 (UNION CARBIDE)<br><br>---- | | B 01 D 19/04<br>C 08 L 83/04 |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 09-11-19 | TEPLY |

EPO Form 1503.1 06.78